# EUROPEAN PATENT SPECIFICATION

(11) **EP 3 340 705 B1**
(45) Date of publication and mention of the grant of the patent: **08.04.2020**
(21) Application number: 15904130.0
(22) Date of filing: 18.09.2015
(51) Int. Cl.: H04W 72/04, H04B 7/26, H04J 3/06

(54) **BAND ALLOCATION DEVICE AND FRAME FORMAT**
BANDZUORDNUNGSVORRICHTUNG UND RAHMENFORMAT
DISPOSITIF D'ALLOCATION DE BANDE ET FORMAT DE TRAME

(43) Date of publication of application: 27.06.2018
(73) Proprietor: Mitsubishi Electric Corporation, Chiyoda-ku Tokyo 100-8310 (JP)
(72) Inventor: TSUKAMOTO, Kaoru, Tokyo 100-8310 (JP)
(74) Representative: Pfenning, Meinig & Partner mbB
(86) International application number: PCT/JP2015/076670
(87) International publication number: WO 2017/046943

(56) References cited:
- EP-A1- 0 681 406
- EP-A1- 0 709 982
- JP-A- H1 146 174
- JP-A- H09 107 580
- JP-A- H09 187 061
- JP-A- 2007 194 869
- US-A- 5 570 347
- US-A1- 2003 169 722

## Description

### Technical Field

The present disclosure relates to wireless communication technology using time-division multiple access method.

### Background Art

Among multiple access methods in mobile wireless communication systems, there is a method called time-division multiple access (TDMA) method which allows multiple terminals to share a frequency by allocating unit times (time slots) during which each terminal occupies the frequency to share.

In the uplink transmission from a terminal to a base station using TDMA method, the time for a radio wave transmitted from a terminal to reach a base station varies depending on the distance between the terminal and the base station. Therefore, in the case where two terminals located in different positions perform transmission using successive time slots, even if the two terminals perform transmission without time overlap, two radio waves may interfere with each other because of the propagation time difference between the radio waves when the base station receives the radio waves transmitted from the two terminals.

A conventional interference avoidance technique to cope with this problem is to insert a guard time at every boundary between the time slots. The terminals do not perform transmission during the guard times. (Refer to Non-patent document 1)

### Prior Art Document

The application US 2003/0169722 A1 discloses a method for the communication between base stations and user terminals with a frame structure with a sequence of uplink slots each having a predetermined duration, a sequence of downlink slots, each having a predetermined duration that is greater than the duration of the uplink slots, an interburst guard time between each uplink slot, an interburst guard time between each downlink slot, and an interframe guard time after the sequence of downlink slots.

### Non-patent Document

Non-patent document 1: "Applications of Digital Wireless Technologies to Global Wireless Communications" written by Seiichi Sampei, Pearson Education Japan, P.299

### Brief Summary of the Invention

### Problems to be solved by the Invention

When, however, the propagation delay difference is large between a terminal close to a base station and a terminal far from the base station, as is the case with a system with a large cell radius or a system with an elongated cell, a very long guard time has to be inserted at every boundary between the time slots for the conventional interference avoidance technique described above. Therefore, in the case of a wireless communication system in which multiple time slots are allocated to a terminal in a successive manner, this means that a very long guard time is to be inserted even at the boundary between the time slots transmitted by the same terminal, resulting in deteriorated uplink transmission efficiency.

It is an object of the present disclosure to solve the problem described above, and to provide a band allocation system which performs time slot allocation with improved transmission efficiency in a TDMA wireless communication system in which successive multiple time slots are to be allocated to a terminal.

### How to solve the problems

A band allocation system according to an embodiment to be described later is a band allocation system to allocate a transmission band to terminals performing transmission using time-division multiple access method which includes: a number-of-terminals determination unit to determine the number of terminals to allocate time slots constituting a frame for time-division multiple access method; a time slot allocation unit to determine, on the basis of the number of the terminals determined by the number-of-terminals determination unit, that time slots whose total number is not less than the number of the terminals minus one are to be non-allocated time slots, which are not to be allocated to any of the terminals, and to allocate time slots of the frame excluding the non-allocated time slots to each of the terminals; and a time slot arrangement unit to determine the arrangement of the time slots of the frame, on the basis of the allocation of the time slots determined by the time slot allocation unit, so that time slots allocated to a terminal may be arranged in a successive manner, and so that at least one of the non-allocated time slots may be arranged between time slots to be allocated to different terminals.

### Advantages of the Invention

With a band allocation system according to the present disclosure, it is not necessary to insert a guard time at each of the boundaries between time slots of time-division multiple access method, and it is possible to improve transmission efficiency.

### Brief Description of the Drawings

Fig. 1 is a block diagram showing an example of a functional configuration of a band allocation system (base station) according to Embodiment 1 of the present disclosure.
Fig. 2 is a block diagram showing an example of a functional configuration of a control unit of the band allocation system according to Embodiment 1.
Fig. 3 is a block diagram showing an example of a hardware configuration of the band allocation system according to Embodiment 1.
Fig. 4 is a block diagram showing an example of a hardware configuration of the band allocation system according to Embodiment 1.
Fig. 5 shows an example of a structure of a downlink frame transmitted by the base station according to Embodiment 1.
Fig. 6 is a flowchart showing an example of a process flow of the control unit of the band allocation system according to Embodiment 1.
Fig. 7 is a schematic diagram showing an example of time slot allocation of an uplink frame performed by the band allocation system according to Embodiment 1.
Fig. 8 is a schematic diagram showing an example of time slot allocation of an uplink frame performed by the band allocation system according to Embodiment 1.
Fig. 9 is a schematic diagram showing an example of a configuration of control information with which the band allocation system according to Embodiment 1 notifies a terminal of time slot allocation of an uplink frame.
Fig. 10 is a schematic diagram showing an example of a configuration of control information with which the band allocation system according to Embodiment 1 notifies a terminal of time slot allocation of an uplink frame.
Fig. 11 is a schematic diagram showing a modified example of time slot allocation of an uplink frame performed by the band allocation system according to Embodiment 1.
Fig. 12 is a schematic diagram showing a modified example of time slot allocation of an uplink frame performed by the band allocation system according to Embodiment 1.
Fig. 13 is a schematic diagram showing a modified example of time slot allocation of an uplink frame performed by the band allocation system according to Embodiment 1.
Fig. 14 is a schematic diagram showing a modified example of time slot allocation of an uplink frame performed by the band allocation system according to Embodiment 1.

### Detailed Description of the Invention

Hereinafter, with reference to the figures, the mode for carrying out the disclosure will be described. In the figures to be referred to below, the same or equivalent parts are given the same symbols. The scope of the disclosure should not be limited by the embodiment described below. The invention is defined by the claims.

### Embodiment 1

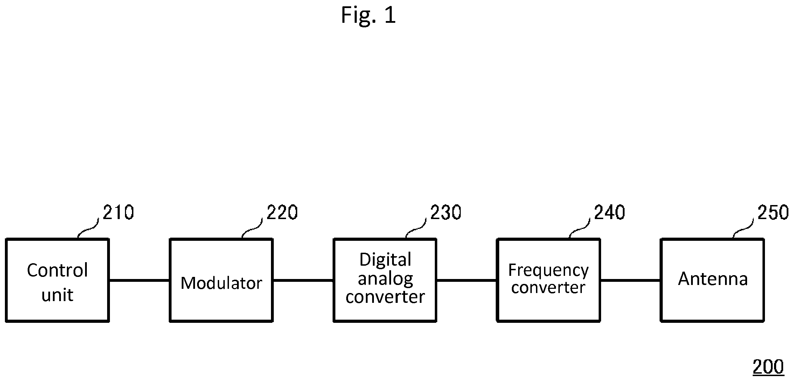

Fig. 1 is a block diagram showing an example of a functional configuration of a band allocation system (base station) 200 according to Embodiment 1 of the present disclosure. The base station 200 includes a control unit 210, a modulator 220, a digital-analog converter (also, referred to as a "DA converter") 230, a frequency converter 240, and an antenna 250. In reality, the base station 200 may include a receiving antenna, a frequency converter, an analog-digital converter, a demodulator, etc. for processing signals to receive from terminals. As not being referred to in the description below, these receiver-side function blocks are omitted to simplify the figures. Also, the band allocation system is described as a base station in this description. The band allocation system, however, may be configured as a single device having band allocation function, being separated from components for wireless signal transmission function such as a modulator 220, a DA converter 230, a frequency converter 240, and an antenna 250.

At the base station 200, the control unit 210 generates a transmission bit sequence of a control signal or a data signal to be transmitted from the base station to a terminal and outputs it to the modulator 220. The modulator 220 modulates the transmission bit sequence which is an input signal. The modulator 220 may use, for its modulation process, a conventional modulation scheme that is compatible with the wireless communication system in which the base station 200 of the present disclosure is employed. The DA converter 230 converts the modulator-processed digital signal (modulation signal) outputted from the modulator 220 into an analog signal. The frequency converter 240 converts the analog signal inputted from the DA converter 230 into a signal with a carrier wave frequency. The antenna 250 transmits, by radio waves, the signal with a carrier wave frequency, which is frequency-converted by the frequency converter 240, to a target terminal in communication. The DA converter 230 and the frequency converter 240 can be configured by using existing known techniques. Note that the number of the antennas of the base station 200 here is assumed to be one to simplify the description, but it is not limited to one. It is also possible to include multiple DA converters 230, frequency converters 240, and antennas 250, where the modulator 220 is to output modulation signals for the multiple antennas.

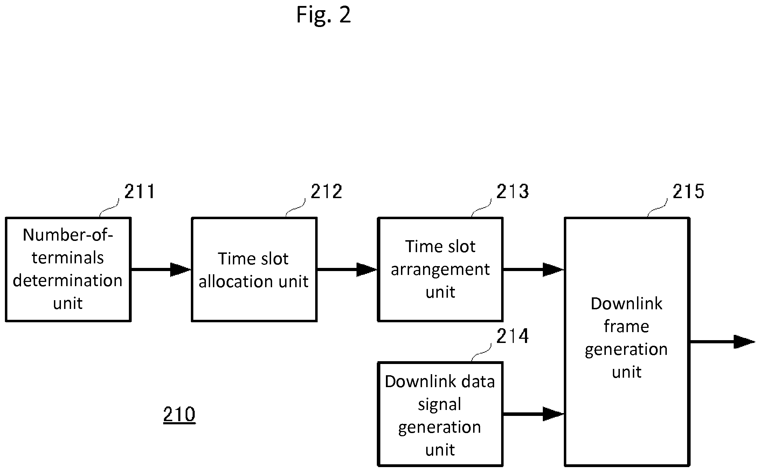

Fig. 2 is a block diagram showing an example of a functional configuration of the control unit 210. The control unit 210 includes a number-of-terminals determination unit 211, a time slot allocation unit 212, a time slot arrangement unit 213, a downlink data signal generation unit 214, and a downlink frame generation unit 215. Although the control unit 210 may include a control function of the base station 200 which is not related to the present disclosure, only the functions which relate to the present disclosure are shown in Fig. 2 for simplification.

The number-of-terminals determination unit 211 determines the number of terminals which perform uplink transmission. For the terminals totaling the number determined by the number-of-terminals determination unit 211, the time slot allocation unit 212 determines the number of time slots (hereinafter, "time slot" may also be referred to only as "slot") of an uplink frame to be allocated to each terminal. Here, a frame consists of a predetermined number of multiple time slots and is a unit of data transmission in a wireless transmission section. The time slot arrangement unit 213 generates a bit sequence to notify each terminal, to which the time slot allocation unit 212 has determined the number of time slots to be allocated, of the positions of the time slots for each terminal to use in uplink. The downlink data signal generation unit generates a bit sequence of downlink data signals excluding a control signal. The downlink frame generation unit 215 generates a downlink frame to be transmitted by the base station 200 in the downlink and outputs the frame as a bit sequence.

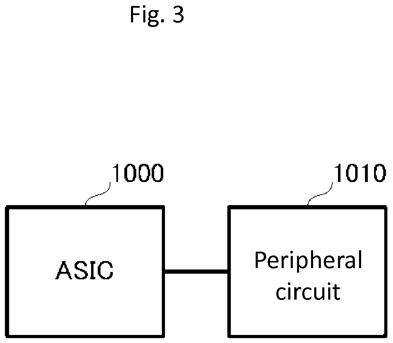

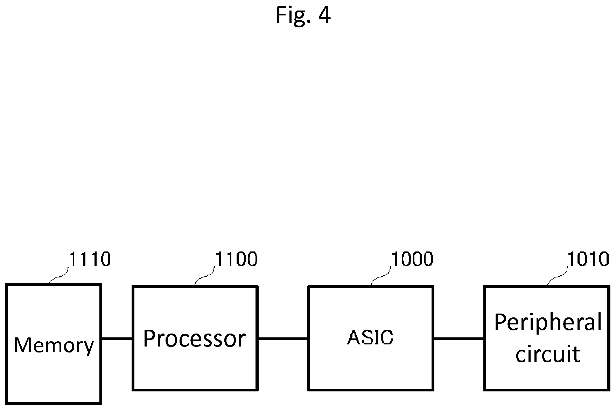

The control unit 210, the modulator 220, the DA converter 230, the frequency converter 240, and the antenna 250, described above, can be realized by hardware constituted, as shown in Fig. 3, for example, of an ASIC (Application Specific Integrated Circuit) 1000 and a peripheral circuit 1010 thereof, etc. It is also possible to realize the functions of the ASIC 1000 by a programmable device such as an FPGA (Field Programmable Gate Array). As shown in Fig. 4, the control unit 210 and the modulator 220 can be realized by hardware constituted of a processor 1100 and of a peripheral circuit such as a memory 1110 and by a program stored in the memory 1110 and executed by the processor 1100. They can also be realized by a combination of hardware and software. It is also possible to realize a part of the functions of the control unit 210 (for example, the downlink frame generation unit) by hardware and to realize the other functions by a processor and a program executed by the processor.

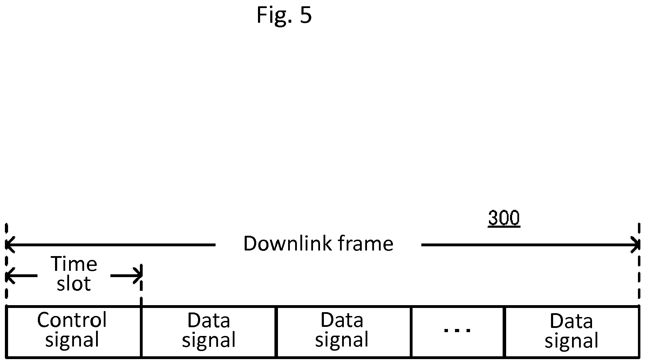

Next, the operation will be described. Fig. 5 is a schematic diagram showing an example of the structure of the downlink frame 300 to be transmitted by the base station 200 according to this embodiment. The downlink frame 300 includes multiple time slots. In this example, the first time slot of the downlink frame 300 carries a downlink control signal and the rest of the time slots carry data signals addressed to each terminal. The frame may include a time slot of a kind different from a control signal and a data signal shown in Fig. 5. The order of time slots of a control signal and data signals does not have to be the same as the order shown in Fig. 5, and another order may be used. The base station 200 transmits the frame shown in Fig. 5 at predetermined intervals and performs the process shown below at every predetermined interval.

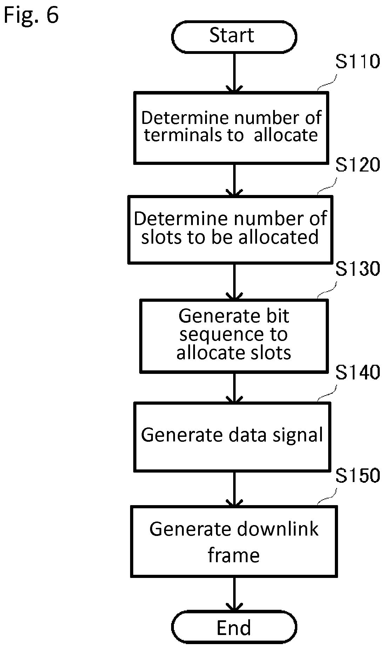

First, the control unit 210 generates a bit sequence of a control signal and data signals to be transmitted in the downlink. Fig. 6 is a flowchart showing an example of the operation of the control unit 210. In the description below, it is assumed that the control unit 210 already knows the number of terminals serving under its own base station (hereinafter, referred to as "number of in-cell terminals") through the previously-performed uplink communication, for example, using a random-access channel etc. between the base station and the terminals. First, the number-of-terminals determination unit 211 of the control unit 210 determines the number of terminals to allocate time slots (uplink slots) of an uplink frame based on the number of in-cell terminals (S110).

Next, the time slot allocation unit 212 determines the number of time slots to be allocated to each terminal on the basis of the number of terminals to allocate time slots of an uplink frame to (S120). Here, an example of a method in which the time slot allocation unit 212 determines the number of time slots to be allocated to each terminal is specifically described. Here, it is assumed that the uplink slots are to be equally allocated to each terminal. When the number of time slots included in the uplink frame is given by N, and the number of terminals to allocate the time slots of the uplink frame is given by M, then (N - (M - 1)) / M slots are to be allocated to each terminal. For example, if N = 7 and M = 1, all of seven time slots in the uplink frame are to be allocated to a single terminal.

If N = 7 and M = 2, three successive time slots are to be allocated to each of two terminals (each referred to as "terminal A" and "terminal B"). At this time, one time slot in the seven time slots of the uplink frame is not to be allocated to any of the terminals. If (N - (M - 1)) / M is indivisible, it should be adjusted so that the number of slots to be allocated to each terminal will be an integer.

As described, when allocating the time slots of an uplink frame to the terminals serving under the base station, the control unit 210 of the base station 200 according to this embodiment does not allocate time slots whose total number is the number of in-cell terminals minus one to any of the terminals thereunder. The time slot which is not to be allocated to any of the terminals is referred to as "non-allocated time slot" or "non-allocated slot".

Next, on the basis of the number of time slots in an uplink frame to be allocated to each terminal determined by the time slot allocation unit 212, the time slot arrangement unit 213 determines the positions in the uplink frame of the time slots to be allocated to each terminal, and generates a bit sequence of a control signal to transmit the determined positions in a downlink frame (S130). Here, the allocation of time slots of an uplink frame to each terminal is determined so that successive time slots will be allocated to each terminal and at least one non-allocated time slot will exist between time slots which are to be allocated to different terminals.

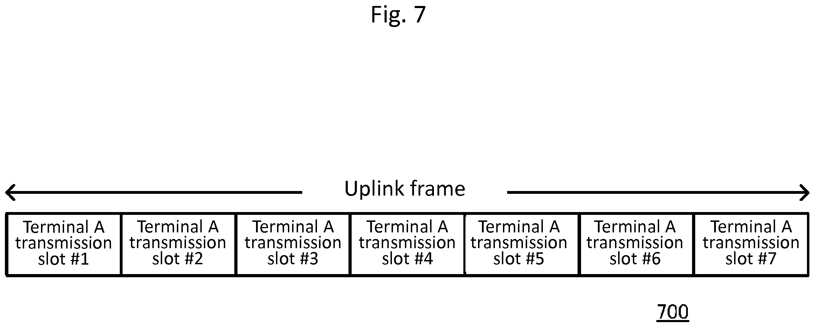

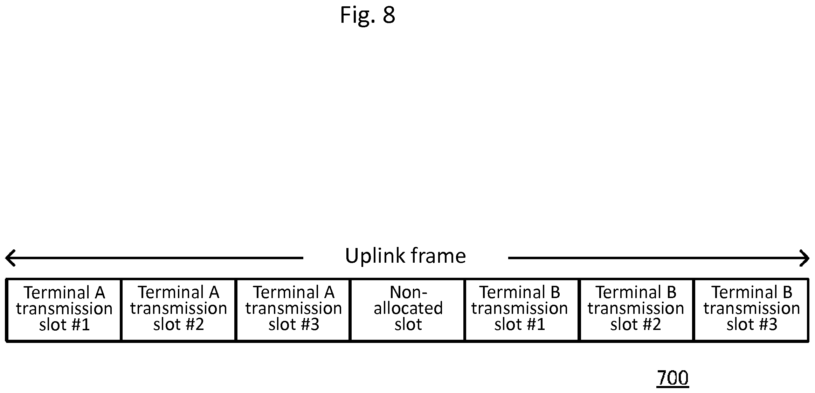

For example, if N = 7 and M = 1 as shown in the above example, and when the terminal to allocate uplink slots to is given as a terminal A, all the time slots of an uplink frame 700 are allocated to the terminal A as shown in Fig. 7. It is assumed here that no guard time is to be provided between time slots in an uplink frame received by the base station according to this embodiment. If N = 7 and M = 2, the time slot which is not to be allocated to any of the terminals is to be arranged between a slot allocated to the terminal A and a slot allocated to the terminal B. The uplink frame in the example of this time slot allocation is shown in Fig. 8.

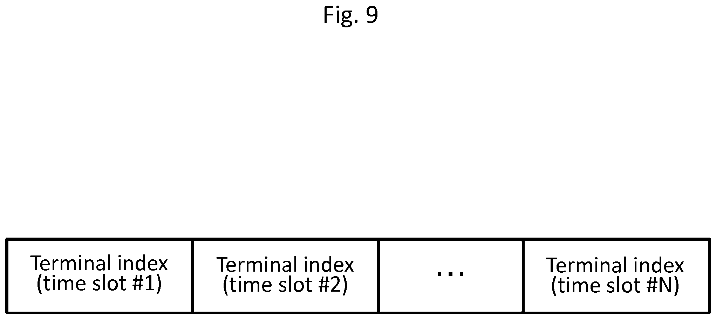

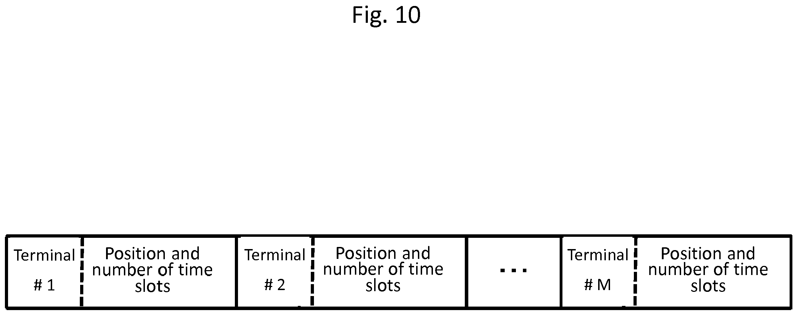

The control signal to notify a terminal of this time slot allocation can be formatted, for example, as shown in Fig. 9. Fig. 9 shows an example of notifying to which terminal each of the N time slots, from the first to the Nth, should be allocated, by specifying a terminal's index (for example, a number permanently or temporarily assigned to a terminal). For another example, as shown in Fig. 10, a combination of the terminal identification index (here, numbers from 1 to M), and the beginning position and the number of the time slots to be allocated to each terminal may be used. The control signal may include information other than the information on time slot allocation to terminals.
The present disclosure has no limitation to a method for generating the information other than the information on time slot allocation to terminals.

Next, the downlink data signal generation unit 214 generates a bit sequence of information other than the control signal that is to be transmitted in the downlink (S140). The present disclosure sets no limit to a method for generating a data signal itself to be transmitted in the downlink. For example, it may generate a bit sequence of, as a data signal, the information which is received from another device and is addressed to a terminal. Next, the downlink frame generation unit 215 generates the downlink frame 300 using a bit sequence inputted from the time slot arrangement unit 213 and a bit sequence inputted from the downlink data signal generation unit 214, and outputs the bit sequence of the generated downlink frame 300 to the modulator 220 (S150).

Receiving an input of the bit sequence of the downlink frame 300 from the control unit 210, the modulator 220 inputs a modulation signal, which is a digital signal obtained by modulating the inputted bit sequence, to the digital-analog converter 230. The digital-analog converter 230 converts the inputted modulation signal into an analog signal, to input it to the frequency converter 240. The frequency converter 240 converts the inputted analog signal into a signal with a carrier wave frequency to input it to the antenna 250. The antenna 250 emits the inputted signal with the carrier wave frequency as a radio wave. It is possible to apply as needed existing known techniques to the modulation process performed by the modulator 220, to the digital-analog conversion process performed by the DA converter 230, and to the frequency conversion process into carrier wave frequency performed by the frequency converter 240.

As described above, a band allocation system according to this embodiment is a band allocation system to allocate a transmission band (uplink band) to terminals performing transmission using time-division multiple access method which includes: a number-of-terminals determination unit to determine the number of the terminals to allocate time slots constituting a frame for time-division multiple access method; a time slot allocation unit to determine, on the basis of the number of the terminals determined by the number-of-terminals determination unit, that time slots whose total number is not less than the number of the terminals minus one are to be non-allocated time slots, which are not to be allocated to any of the terminals, and to allocate time slots of the frame excluding the non-allocated time slots to each of the terminals; and a time slot arrangement unit to determine the arrangement of the time slots of the frame, on the basis of the allocation of the time slots determined by the time slot allocation unit, so that the time slots allocated to a single terminal may be arranged in a successive manner, and so that at least one of the non-allocated time slots may be arranged between the time slots to be allocated to different terminals. Therefore, it is unnecessary to insert a guard time at each of the boundaries between time slots, which leads to improved transmission efficiency.
The effect to improve transmission efficiency is remarkable, especially in the case where the number of in-cell terminals is small.

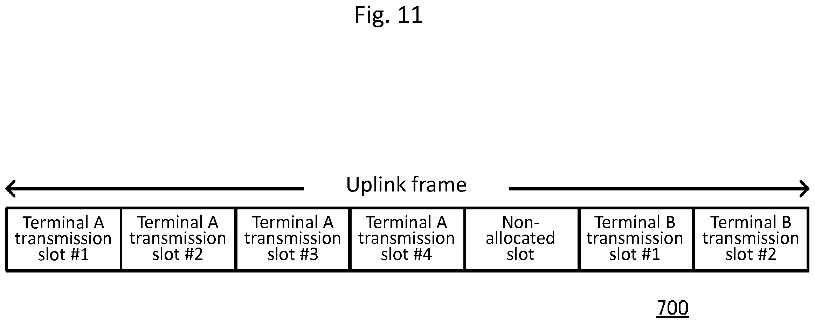

Although, in the above description, the slots are equally allocated to each terminal, the way to allocate them is not limited to this. It is possible to allocate unequal numbers of slots for uplink to each terminal in accordance with their requested throughputs or priorities, etc. For example, in the case of N = 7 and M = 2, if the uplink slots are to be allocated to two terminals, a terminal A and a terminal B, in the ratio of a : b, a × (N - (M - 1)) / (a + b) uplink slots are allocated to the terminal A, and b × (N - (M - 1)) / (a + b) uplink slots are allocated to the terminal B. Here, when it is assumed that a = 2 and b = 1, four uplink slots are allocated to the terminal A and two uplink slots are allocated to the terminal B. As shown in Fig. 11, the uplink frame 700 consists of four successive terminal A transmission slots #1 - #4, a non-allocated slot which is not to be allocated to any of the terminals, and two successive terminal B transmission slots #1 - #2.

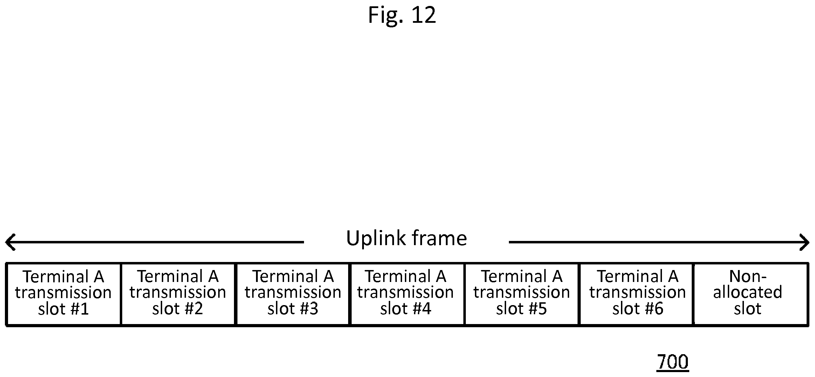

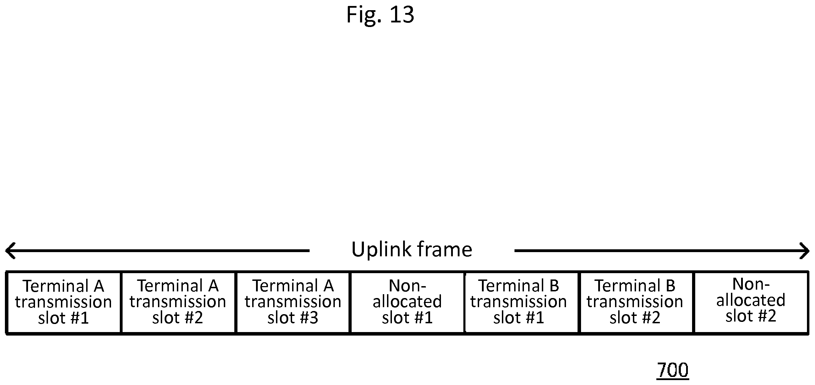

The control unit 210 may also allocate the uplink time slots to each terminal so that the last slot of an uplink frame will always be a non-allocated slot. For example, in the case where the uplink slots are to be evenly allocated to each terminal, (N - M) / M slots are allocated to each terminal. In the case of N = 7 and M = 1, as shown in Fig. 12, the uplink frame 700 consists of six successive terminal A transmission slots #1 - #6 and a non-allocated slot which is not to be allocated to any of the terminals. In the case of N = 7 and M = 2, as shown in Fig. 13, the uplink frame 700 consists of three successive terminal A transmission slots #1 - #3, a non-allocated slot #1 which is not to be allocated to any of the terminals, following the terminal A transmission slot #3, two successive terminal B transmission slots #1 - #2, and a non-allocated slot #2 which is not to be allocated to any of the terminals, following the terminal B transmission slot #2. Here, it is possible to allocate two time slots to one terminal in the former part of the uplink frame and to allocate three time slots to the other terminal in the latter part of it. In such a case that equal numbers of time slots cannot be allocated to terminals as above, there are alternative allocation ways: to allocate more slots to a terminal requesting higher throughput; to allocate slots by alternately changing, frame by frame in uplink, terminals to which more time slots should be allocated; and to randomly choose terminals to which more time slots should be allocated. As described in the above examples, unequal time slot allocation may be used, instead of equal allocation to terminals.

As described, by allocating uplink time slots so that the last slots of uplink frames in the uplink transmission will always be non-allocated slots, when the terminal to which the last slot of the current uplink frame is allocated differs from the terminal to which the first slot of the next uplink frame is allocated, slot collisions can be avoided at the time of receiving at the base station and uplink reception performance deterioration can be suppressed.

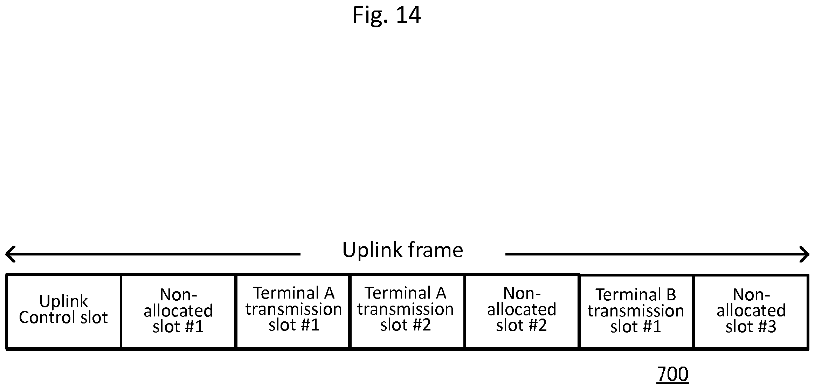

In the case where an uplink frame is configured so that the first time slot is a time slot for the control of an uplink for any of the terminals to use and the rest of the time slots thereafter are time slots for data transmission in the uplink, the control unit 210 may allocate time slots of an uplink frame to each terminal so that the time slot next to the controlling time slot in uplink will always be a non-allocated slot. For example, an arrangement for the uplink frame 700 in a case of N = 7 and M = 2 is shown in Fig. 14. The uplink frame 700 in this case consists of a time slot for the control of an uplink (uplink-controlling time slot), a non-allocated slot #1 which is not to be allocated to any of the terminals, two successive terminal A transmission slots #1 - #2, a non-allocated slot #2, a terminal B transmission slot #1, and a non-allocated slot #3. Here, the numbers of the terminal A transmission slots and the terminal B transmission slots are not limited to the example above. It is possible to allocate one slot to terminal A transmission and two slots to terminal B transmission.

As described, by always arranging a non-allocated slot next to the controlling time slot which is to be arranged at a specific position (for example, at the beginning) in an uplink frame, when the terminal to which the controlling time slot is allocated and the terminal to which the following time slots for data transmission are allocated are different, slot collisions can be avoided at the time of receiving at the base station and uplink reception performance deterioration can be suppressed.

When the terminal to which an uplink-controlling time slot is allocated and the terminal to which the first time slot for data transmission following the controlling time slot is allocated are the same, the time slot next to the controlling time slot may be used as a time slot for data transmission instead of a non-allocated slot.

As described, when the terminal to which an uplink-controlling time slot is allocated and the terminal to which the first time slot for data transmission following the controlling time slot is allocated are the same, by using the time slot next to the uplink-controlling time slot as a time slot for data transmission instead of a non-allocated slot, the number of non-allocated slots decreases by one, and uplink transmission efficiency can be improved thereby.

### Industrial Applicability

As described above, the present disclosure is effective in improving the efficiency of uplink transmission of time-division multiple access method, and makes it possible to suppress the percentage of guard times in an uplink frame, especially in such an environment with a large cell size and a small number of in-cell terminals.

### List of Symbols

- 200:: band allocation system (base station)
- 210:: control unit
- 211:: number-of-terminals determination unit
- 212:: time slot allocation unit
- 213:: time slot arrangement unit
- 214:: downlink data signal generation unit
- 215:: downlink frame generation unit
- 220:: modulator
- 230:: digital-analog converter (DA converter)
- 240:: frequency converter
- 250:: antenna
- 300:: downlink frame
- 700:: uplink frame
- 1000:: ASIC
- 1010:: peripheral circuit
- 1100:: processor
- 1110:: memory

## Claims

1. An uplink band allocation system to allocate a transmission band to terminals performing transmission using time-division multiple access method, comprising a number-of-terminals determination unit (211), a time slot allocation unit (212) and a slot arrangement unit (213) **characterized in that**:
the number-of-terminals determination unit (211) is configured to determine the number of terminals to allocate time slots constituting a frame for time-division multiple access method;
the time slot allocation unit (212) is configured to determine, on the basis of the number of the terminals determined by the number-of-terminals determination unit (211), that time slots whose total number (N) is not less than the number of the terminals (M) minus one are to be non-allocated time slots, which are not to be allocated to any of the terminals, and to allocate time slots of the frame excluding the non-allocated time slots to each of the terminals; and
the slot arrangement unit (213) is configured to determine the arrangement of the time slots of the frame, on the basis of the allocation of the time slots determined by the time slot allocation unit (212), so that time slots allocated to a terminal may be arranged in a successive manner, and so that at least one of the non-allocated time slots may be arranged between time slots to be allocated to different terminals.

2. The uplink band allocation system according to claim 1, wherein the slot arrangement unit (213) makes a last slot of the frame one of the non-allocated time slots.

3. The uplink band allocation system according to claim 1 or 2, wherein:
the time slot allocation unit (212) makes at least one time slot of the frame a controlling slot which is to be used by any of the terminals; and
the slot arrangement unit (213) makes a slot next to the controlling slot a non-allocated time slot.

4. The uplink band allocation system according to claim 3, wherein the slot arrangement unit (213) makes the time slot next to the controlling slot, not a non-allocated time slot, but a time slot to be allocated to the same terminal as a terminal which uses the controlling slot.

## Patentansprüche

1. Uplink-Band-Zuweisungssystem, um ein Übertragungsband Endgeräten zuzuweisen, die Übertragung mittels eines Zeitmultiplex-Vielfachzugriffsverfahrens durchführen, umfassend eine Anzahl-von-Endgeräten-Bestimmungseinheit (211), eine Zeitschlitzzuweisungseinheit (212) und eine Schlitzanordnungseinheit (213), **dadurch gekennzeichnet, dass**:
die Anzahl-von-Endgeräten-Bestimmungseinheit (211) eingerichtet ist, die Anzahl von Endgeräten zu bestimmen, um Zeitschlitze, bildend einen Frame für das Zeitmultiplex-Vielfachzugriffsverfahren, zuzuweisen;
die Zeitschlitzzuweisungseinheit (212) eingerichtet ist, auf Grundlage der Anzahl der Endgeräte, die durch die Anzahl-von-Endgeräten-Bestimmungseinheit (211) bestimmt wird, zu bestimmen, dass Zeitschlitze, deren Gesamtanzahl (N) nicht kleiner ist als die Anzahl der Endgeräte (M) minus eins, nicht zugewiesene Zeitschlitze sein sollen, die keinem der Endgeräte zuzuweisen sind, und jedem der Endgeräte Zeitschlitze des Frames, ausschließlich der nicht zugewiesenen Zeitschlitze, zuzuweisen; und
die Schlitzanordnungseinheit (213) eingerichtet ist, die Anordnung der Zeitschlitze des Frames zu bestimmen auf Grundlage der Zuweisung der Zeitschlitze, die durch die Zeitschlitzzuweisungseinheit (212) bestimmt wird, so dass einem Endgerät zugewiesene Zeitschlitze in einer aufeinander folgenden Weise angeordnet werden können, und so dass zumindest einer der nicht zugewiesenen Zeitschlitze zwischen Zeitschlitzen angeordnet werden kann, die unterschiedlichen Endgeräten zuzuweisen sind.

2. Uplink-Band-Zuweisungssystem nach Anspruch 1, wobei die Schlitzanordnungseinheit (213) einen letzten Schlitz des Frames zu einem der nicht zugewiesenen Zeitschlitze macht.

3. Uplink-Band-Zuweisungssystem nach Anspruch 1 oder 2, wobei:
die Zeitschlitzzuweisungseinheit (212) zumindest einen Zeitschlitz des Frames zu einem steuernden Schlitz macht, der von irgendeinem der Endgeräte zu nutzen ist; und
die Schlitzanordnungseinheit (213) einen Schlitz neben dem steuernden Schlitz zu einem nicht zugewiesenen Schlitz macht.

4. Uplink-Band-Zuweisungssystem nach Anspruch 3, wobei die Schlitzanordnungseinheit (213) den Zeitschlitz neben dem steuernden Schlitz nicht zu einem nicht zugewiesenen Zeitschlitz macht, sondern zu einem Zeitschlitz, der dem gleichen Endgerät zuzuweisen ist wie einem Endgerät, das den steuernden Schlitz nutzt.

## Revendications

1. Système d'attribution de bande de liaison montante pour attribuer une bande de transmission à des terminaux effectuant une transmission en utilisant un procédé d'accès multiples par répartition dans le temps, comprenant une unité de détermination de nombre de terminaux (211), une unité d'attribution de tranches de temps (212) et une unité d'agencement de tranches (213), **caractérisé en ce que** :
l'unité de détermination de nombre de terminaux (211) est configurée pour déterminer le nombre de terminaux pour attribuer des tranches de temps constituant une trame pour le procédé d'accès multiples par répartition dans le temps ;
l'unité d'attribution de tranches de temps (212) est configurée pour déterminer, sur la base du nombre de terminaux déterminé par l'unité de détermination de nombre de terminaux (211), que des tranches de temps dont le nombre total (N) est supérieur ou égal au nombre de terminaux (M) moins un sont des tranches de temps à ne pas attribuer, qui ne sont pas à attribuer à l'un quelconque des terminaux, et pour attribuer les tranches de temps de la trame, à l'exclusion des tranches de temps non attribuées, à chacun des terminaux ; et
l'unité d'agencement de tranches (213) est configurée pour déterminer l'agencement des tranches de temps de la trame, sur la base de l'attribution des tranches de temps déterminée par l'unité d'attribution de tranches de temps (212), de sorte que les tranches de temps attribuées à un terminal puissent être agencées successivement, et de sorte qu'au moins l'une des tranches de temps non attribuées puisse être agencée entre des tranches de temps à attribuer à différents terminaux.

2. Système d'attribution de bande de liaison montante selon la revendication 1, dans lequel l'unité d'agencement de tranches (213) fait en sorte qu'une dernière tranche de la trame soit l'une des tranches de temps non attribuées.

3. Système d'attribution de bande de liaison montante selon la revendication 1 ou 2, dans lequel :
l'unité d'attribution de tranches de temps (212) fait en sorte qu'au moins une tranche de temps de la trame soit une tranche de commande qui est destinée à être utilisée par l'un quelconque des terminaux ; et
l'unité d'agencement de tranches (213) fait en sorte qu'une tranche à la suite de la tranche de commande soit une tranche de temps non attribuée.

4. Système d'attribution de bande de liaison montante selon la revendication 3, dans lequel l'unité d'agencement de tranches (213) fait en sorte que la tranche de temps à la suite de la tranche de commande ne soit pas une tranche de temps non attribuée, mais une tranche de temps à attribuer au même terminal qu'un terminal qui utilise la tranche de commande.
